# EUROPÄISCHE PATENTANMELDUNG

(11) **EP 0 744 573 A1**
(43) Veröffentlichungstag der Anmeldung: **27.11.1996**
(21) Anmeldenummer: 96890084.5
(22) Anmeldetag: 15.05.1996
(51) Int. Cl.: F16L 47/00, F16L 13/007, F16L 33/20

(54) **Verbinder für Rohre oder Schläuche mit einer mit schweissbarem Kunststoff umhüllten metallischen Stützhülse**

(30) Priorität: 24.05.1995 AT 877/95
(71) Anmelder: KE-KELIT Kunststoffwerk Gesellschaft m.b.H., A-4017 Linz (AT)
(72) Erfinder: Egger, Karl, 4203 Altenberg (AT)
(74) Vertreter: Hübscher, Heiner, Dipl.-Ing.

(57) **Zusammenfassung**

Ein Verbinder für Rohre oder Schläuche weist eine metallische Stützhülse (1) auf, die in einem vorzugsweise sägezahnförming profilierten Stutzen (2) zum Aufschieben eines nicht schweißbaren Schlauches oder Rohres ausläuft. Ferner ist eine diesen Schlauch bzw. dieses Rohr umschließende Preßhülse (3) zum Eindrücken des Schlauch- bzw. Rohrwerkstoffes in die Profilierung des Stutzens (2) vorgesehen. Um Schläuche oder Rohre aus nicht schweißbarem Werkstoff einerseits mit schweißfähigen Schläuchen oder Rohren anderseits zu verbinden, ist die Stützhülse (1) mit einem schweißbaren Kunststoff umhüllt und die Kunststoffhülle (7) zu einem Anschlußstutzen (8) für ein schlauch- oder rohrförmiges Leitungsstück aus ebenfalls schweißbarem Kunststoff verlängert.

## Beschreibung

Die Erfindung betrifft einen Verbinder für Rohre oder Schläuche mit einer metallischen Stützhülse, die in einen vorzugsweise sägezahnförmig profilierten Stutzen zum Aufschieben eines nicht schweißbaren Schlauches oder Rohres ausläuft, und einer diesen bzw. dieses umschließenden Preßhülse zum Eindrücken des Schlauch- bzw. Rohrwerkstoffes in die Profilierung des Stutzens.

Ein derartiger Verbinder ist aus der Praxis bereits bekannt, wobei die Stützhülse aber an der dem Stutzen gegenüberliegenden Seite mit einem Gewinde versehen ist, um ein weiteres Rohr, eine Armatur od. dgl. durch Aufschrauben anschließen zu können. Es geht also hier nur darum, zwei nicht schweißfähige Gegenstände miteinander zu verbinden, wobei durch das Einpressen des auf den Stutzen aufgeschobenen Schlauches oder Rohres in die sägezahnförmige Profilierung des Stutzens eine nicht nur zugfeste, sondern auch aufgrund der sich ergebenden Labyrinthdichtung Dichtigkeit erreicht wird, die durch über den Stutzen gezogene elastische Dichtringe noch verbessert werden kann.

Demgegenüber liegt der Erfindung die Aufgabe zugrunde, einen Verbinder der eingangs geschilderten Art zu schaffen, der es erlaubt, schweißbare Schläuche oder Rohre einerseits mit nicht schweißfähigen Rohren oder Stutzen od. dgl. anderseits zugfest und dicht zusammenzufügen, was bei verschiedenen Installationen erforderlich ist.

Die Erfindung löst die gestellte Aufgabe dadurch, daß die Stützhülse mit einem schweißbaren Kunststoff umhüllt und die Kunststoffhülle zu einem Anschlußstutzen für ein schlauch- oder rohrförmiges Leitungsstück aus ebenfalls schweißbarem Kunststoff verlängert ist.

Die metallische, vorzugsweise aus Messing bestehende Stützhülse mit ihrem profilierten Stutzen dient also zum Anschließen von einem nicht schweißbaren Schlauch oder Rohr, z. B. aus vernetztem Polyäthylen oder einem Metall-Kunststoff-Verbund oder auch aus Kupfer oder Aluminium, wobei die Preßhülse dieselbe Aufgabe wie bisher erfüllt. Durch die Umhüllung der Stützhülse mit einem schweißbaren Kunststoff, insbesondere einem Polyolefin, und die besondere Form dieser Umhüllung mit der Verlängerung zu einem Anschlußstutzen kann nun ein Schlauch oder Rohr aus schweißbarem Kunststoff angesetzt und damit die gewünschte Verbindung zwischen einem Leitungsteil aus schweißfähigem Kunststoff und einem Leitungsteil aus unschweißbarem Material hergestellt werden.

Die Stützhülse muß in der Kunststoffhülle selbstverständlich drehfest gehalten sein, zu welchem Zweck die Stützhülse in an sich bekannter Weise einen mehrkantigen, insbesondere sechseckigen, Umfang aufweist oder sehnenförmig verlaufende Stirnnuten besitzt.

Um eine wirklich dichte Verbindung zu erhalten, ist die Stützhülse an ihrem Umfang mit Ringnuten und gegebenenfalls auch mit wenigstens einer dem Anschlußstutzen zugekehrten stirnseitigen Ringnut versehen, so daß sich zwischen der Stützhülse und der Hülle eine vielflächige und dadurch besonders wirksame Labyrinthdichtung ergibt.

Der ganze Verbinder braucht nicht unbedingt geradachsig zu verlaufen, es ist vielmehr auch möglich, den Anschlußstutzen der Umhüllung als Krümmer auszubilden, um dadurch einen für manche Installationen notwendigen Verbinder zu erhalten.

In der Zeichnung ist der Erfindungsgegenstand beispielsweise dargestellt und zwar zeigen
- Fig. 1: einen erfindungsgemäßen Verbinder zum Teil im Axialschnitt, zum Teil in Ansicht,
- Fig. 2: einen Querschnitt durch den Verbinder nach der Linie II-II der Fig. 1 und
- Fig. 3: eine Variante der Stützhülse in Stirnansicht von der dem Stutzen entgegengesetzten Seite.

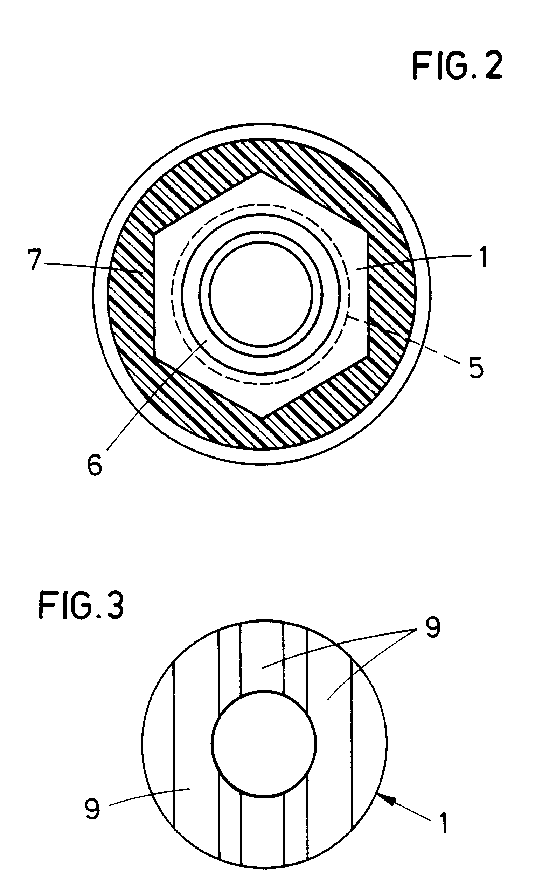

Eine metallische Stützhülse 1 ist mit einem sägezahnförmig profilierten Stutzen 2 zum Aufschieben eines nicht schweißbaren Schlauches oder Rohres versehen. Um den Werkstoff dieses Schlauches oder Rohres in die sägezahnförmige Profilierung des Stutzens 2 eindrücken zu können, dient eine Preßhülse 3 aus Stahl. Mit 4 sind in der zahnförmigen Profilierung des Stutzens 2 liegende Dichtringe bezeichnet. Die Stützhülse 1 ist mit Ringnuten 5 und einer stirnseitigen Ringnut 6 versehen. Dieser Teil wird mit schweißbarem Kunststoff umhüllt, so daß sich eine Hülle 7 ergibt, die in einen Anschlußstutzen 8 ausläuft. Die Nuten 5 und 6 dienen zur Bildung einer Labyrinthdichtung zwischen der Kunststoffhülle 7 und der Stützhülse 1. Damit die Stützhülse 1 in der Umhüllung 7 drehfest gehalten ist, weist die Stützhülse 1 einen sechskantigen Umfang (Fig. 2) auf. Sie könnte aber auch an ihrer dem Anschlußstutzen zugekehrten Stirnseite mit sehnenförmigen Nuten 9 versehen sein (Fig. 3).

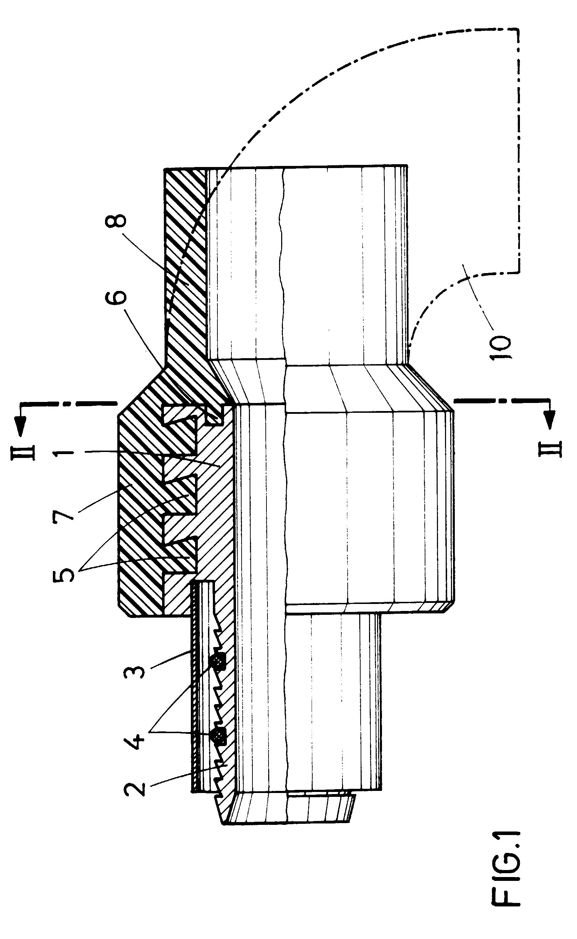

Der Anschlußstutzen 8 könnte zugleich einen Rohrkrümmer 10 bilden, wie dies in Fig. 1 strichpunktiert angedeutet ist. Während der Stutzen 2 zur Aufnahme eines Schlauches oder Rohres aus nicht schweißbarem Material dient, kann an den Anschlußstutzen 8 ein Schlauch oder Rohr aus schweißfähigem Werkstoff, z. B. mittels einer übergeschweißten Muffe od. dgl., verbunden werden.

## Patentansprüche

1. Verbinder für Rohre oder Schläuche mit einer metallischen Stützhülse (1), die in einem vorzugsweise sägezahnförmig profilierten Stutzen (2) zum Aufschieben eines nicht schweißbaren Schlauches oder Rohres ausläuft, und einer diesen bzw. dieses umschließenden Preßhülse (3) zum Eindrücken des Schlauch- bzw. Rohrwerkstoffes in die Profilierung des Stutzens (2), dadurch gekennzeichnet, daß die Stützhülse (1) mit einem schweißbaren Kunststoff umhüllt und die Kunststoffhülle (7) zu einem Anschlußstutzen (8) für ein schlauch- oder rohrförmiges Leitungsstück aus ebenfalls schweißbarem Kunststoff verlängert ist.

2. Verbinder nach Anspruch 1, dadurch gekennzeichnet, daß die Stützhülse (1) in der Kunststoffhülle (7) drehfest gehalten ist und zu diesem Zweck in an sich bekannter Weise einen mehrkantigen Umfang aufweist oder sehnenförmig verlaufende Stirnnuten (6) besitzt.

3. Verbinder nach Anspruch 1, dadurch gekennzeichnet, daß die Stützhülse (1) an ihrem Umfang mit Ringnuten (5) und gegebenenfalls auch mit wenigstens einer dem Anschlußstutzen (8) zugekehrten stirnseitigen Ringnut (6) versehen ist,

4. Verbinder nach Anspruch 1, dadurch gekennzeichnet, daß der Anschlußstutzen (8) der Umhüllung (7) als Krümmer (10) ausgebildet ist.
